# EUROPÄISCHE PATENTSCHRIFT

(11) **EP 3 262 306 B1**
(45) Veröffentlichungstag und Bekanntmachung des Hinweises auf die Patenterteilung: **30.09.2020**
(21) Anmeldenummer: 16705487.3
(22) Anmeldetag: 17.02.2016
(51) Int. Cl.: F15B 13/08

(54) **DRUCKMITTELEINRICHTUNG MIT AUFGRUND VON FORMDICHTUNGEN VARIABLEN STRÖMUNGSVERBINDUNGEN**
COMPRESSED AIR DEVICE WITH SEALINGS PROVIDING VARIABLE FLOW CONNECTIONS
DISPOSITIF À AIR COMPRIMÉ AVEC DES JOINTS PERMETTANT DIFFÉRENTES CONNECTIONS FLUIDIQUES

(30) Priorität: 25.02.2015 DE 102015102725
(43) Veröffentlichungstag der Anmeldung: 03.01.2018
(73) Patentinhaber: KNORR-BREMSE Systeme für Nutzfahrzeuge GmbH, 80809 München (DE)
(72) Erfinder: KUHLEN, Christian, 85609 Aschheim (DE); SCHNITTGER, Karsten, 80935 München (DE); LEINUNG, Andreas, 81245 München (DE)
(86) Internationale Anmeldenummer: PCT/EP2016/053308
(87) Internationale Veröffentlichungsnummer: WO 2016/135012

(56) Entgegenhaltungen:
- EP-A1- 0 093 359
- DE-A1- 2 303 474
- DE-A1-102010 044 910

## Beschreibung

Die Erfindung geht aus von einer Druckmitteleinrichtung eines Fahrzeugs gemäß dem Oberbegriff von Anspruch 1. Eine Druckmitteleinrichtung ist beispielsweise aus DE 39 10 381 A1 in Form einer Sammelanschlussplatte bestehend aus mehreren Zwischenplatten und Endplatten bekannt. Dort ist zwischen zwei Zwischenplatten eine Formdichtung angeordnet, welche zum Verschluss von in den beiden Zwischenplatten jeweils senkrecht zur Plattenebene ausgebildeten und miteinander fluchtenden Strömungsöffnungen scheibenförmige Verschlüsse aufweist. Je nach Ausführung der Formdichtung können mit drei Verschlüssen alle drei Strömungsöffnungen verschlossen werden, wobei dann keine Strömung von einer Strömungsöffnung in der einen Zwischenplatte in die zugeordnete Strömungsöffnung der anderen Zwischenplatte mehr erfolgen kann, oder es werden in beliebiger Kombination nur eine Strömungsöffnung oder zwei Strömungsöffnungen durch an der betreffenden Formdichtung entsprechend angeordnete Verschlüsse verschlossen. Demzufolge ist eine Gruppe von Formdichtungen vorgesehen, mit jeweils unterschiedlicher Anzahl und/oder Lage von Verschlüssen, um jeweils bestimmte, sich durch die Zwischenplatten hindurch erstreckenden Strömungskanäle zu verschließen bzw. zu öffnen, die in die Strömungsöffnungen münden. Diese Art von Formdichtungen ist dann zweckmäßig, wenn Strömungskanale, der sich durch mehrere Zwischenplatten hindurch erstrecken und senkrecht zur Plattenebene verlaufen, geöffnet oder verschlossen werden sollen, um Druckmittelschaltungen variabel zu gestalten.

Eine gattungsgemäße Druckmitteleinrichtung ist aus EP 0 093 359 A1 bekannt. Dort wird eine einzelne oder einzige Rundschnurdichtung in um 180 Grad zueinander verdrehten Lagen montiert, um einen Durchbruch entweder zu verschließen oder zu öffnen. Hierzu muss die Rundschnurdichtung allerdings stellenweise stark verformt werden, was einen Einsatz von steifen und schwer verformbaren Dichtungen ausschließt und daher die Flexibilität bei der Konstruktion der Druckmitteleinrichtung einschränkt.

Der vorliegenden Erfindung liegt die Aufgabe zugrunde, eine Druckmitteleinrichtung der eingangs erwähnten Art derart fortzubilden, dass möglichst viele Varianten von ihr kostengünstig erzeugt werden können. Diese Aufgabe wird erfindungsgemäß durch die Merkmale von Anspruch 1 gelöst.

### Offenbarung der Erfindung

Die Erfindung geht aus von einer Druckmitteleinrichtung eines Fahrzeugs, in welcher ein Druckmittel strömt, mit einem Mehrschichtaufbau, der wenigstens zwei einander kontaktierende Schichten aufweist, wobei von we- nigstens zwei Strömungsöffnungen jeweils eines Strömungskanals für das Druckmittel beide Strömungsöffnungen in einer ersten Fläche einer ersten Schicht der einander kontaktierenden Schichten oder eine erste Strömungsöffnung in der ersten Fläche und eine zweite Strömungsöffnung in einer zweiten, der ersten Fläche gegenüberliegenden Fläche einer an die erste Schicht angrenzenden zweiten Schicht der einander kontaktierende Schichten mündet, wobei wenigstens eine von der ersten Fläche und/oder von der zweiten Fläche vorspringende nutartige Aufnahme für wenigstens ein Trennteil einer zwischen den beiden Schichten angeordneten Formdichtung vorgesehen ist und die nutartige Aufnahme in einer Ebene parallel zu den Schichten gesehen zwischen einer ersten Kammer, in welche die erste Strömungsöffnung mündet und einer zweiten Kammer, in welche die zweite Strömungsöffnung mündet, angeordnet ist, wobei die erste Kammer und die zweite Kammer wenigstens durch die erste Fläche und durch die zweite Fläche begrenzt sind, wobei
a) die nutartige Aufnahme wenigstens einen Durchbruch für eine Strömungsverbindung zwischen der ersten Kammer und der zweiten Kammer in einer Ebene parallel zu den Schichten aufweist.
   Erfindungsgemäß ist vorgesehen, dass
b) eine Gruppe von wenigstens zwei Formdichtungen für eine Montage zwischen den beiden Schichten vorgesehen ist, wobei eine erste Formdichtung aus der Gruppe von Formdichtungen wenigstens im Bereich des Durchbruchs einen in der nutartigen Aufnahme aufgenommenen Trennteil zur Trennung der ersten Kammer von der zweiten Kammer aufweist und eine zweite Formdichtung aus der Gruppe von Formdichtungen wenigstens im Bereich des Durchbruchs ohne einen solchen Trennteil ausgebildet ist, wobei
c) abhängig von der jeweils aus der Gruppe von Formdichtungen ausgewählten und zwischen den beiden Schichten montierten Formdichtung eine Strömungsverbindung zwischen der ersten Kammer und der zweiten Kammer zustande kommt oder nicht.

Daher werden Strömungsverbindungen zwischen unterschiedlichen Schichten bzw. innerhalb derselben Schicht in einer Ebene parallel zu den beiden sich kontaktierenden Schichten bzw. zwischen diesen Schichten variabel gestaltet. Die Strömung tritt dann z.B. aus einem Strömungskanal durch die erste Strömungsöffnung in der ersten Fläche der ersten Schicht in die erste Kammer ein, durch den Durchbruch oder die Durchbrüche in der nutartigen Aufnahme für die aus der Gruppe von Formdichtungen ausgewählte und zwischen den beiden Schichten angeordnete Formdichtung hindurch, welche hier beispielsweise kein Trennteil aufweist und dann in die zweite Kammer ein und von dort in die zweite Strömungsöffnung in der ersten Fläche oder in der zweiten Fläche, um von dort in den zugeordneten Strömungskanal zu gelangen.

Die nutartige Aufnahme dient dann einerseits als Lagesicherung für die Formdichtung bzw. für deren Trennteil und ermöglicht andererseits mittels des Durchbruchs oder der Durchbrüche eine Strömungsverbindung zwischen den Kammern bzw. Strömungsöffnungen.

Wenn demgegenüber eine Formdichtung aus der Gruppe von Formdichtungen ausgewählt und zwischen den Schichten montiert wurde, welche im Bereich des Durchbruchs oder der Durchbrüche ein Trennteil aufweist, so kommt keine Strömungsverbindung zwischen der ersten Kammer und der zweiten Kammer bzw. zwischen der ersten Strömungsöffnung und der zweiten Strömungsöffnung zustande.

Es wird dabei angenommen, dass eine Verbindung zwischen der ersten Kammer und der zweiten Kammer bzw. zwischen der ersten Strömungsöffnung und der zweiten Strömungsöffnung jeweils ausschließlich durch den Durchbruch bzw. die Durchbrüche in der nutartigen Ausnehmung hindurch erfolgen kann, die wahlweise bei einer Formdichtung mit einem Trennteil in diesem Bereich verschlossen oder einer Formdichtung ohne ein Trennteil in diesem Bereich geöffnet werden kann/können.

Daher kann mit der Erfindung abhängig von einer Auswahl einer Formdichtung aus der Gruppe von vorgegebenen Formdichtungen für eine Montage oder Anordnung zwischen den betreffenden Schichten eine jeweils Druckmittelschaltung, insbesondere Pneumatikschaltung oder Hydraulikschaltung erzeugt werden, ohne dass hierzu die Schichten selbst verändert werden müssten. Dies stellt eine sehr kostengünstige Möglichkeit eröffnet, um lediglich durch Auswechseln einer Formdichtung eine jeweils andere Druckmittelschaltung, insbesondere Pneumatik- oder Hydraulikschaltung zu erzielen. Die Erfindung ist daher insbesondere bei der Erzeugung von Varianten der Druckmitteleinrichtung von Vorteil.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist wenigstens eine der Schichten plattenförmig ausgebildet. Dadurch kann die Druckmitteleinrichtung flach bauen. Gemäß einer Weiterbildung stellt wenigstens eine der Schichten ein Gehäuse oder ein Gehäusebauteil der Druckmitteleinrichtung dar. Unter einem Gehäuse oder Gehäusebauteil soll ein Bauteil oder eine Baugruppe verstanden werden, welches oder welche eine mit der Umgebung in Berührung kommende Außenfläche aufweist. Es muss sich dabei nicht zwangsläufig um ein schalenförmiges, zylindrisches, rechteckförmiges oder quaderförmiges Bauteil mit einem geschlossenen oder offenen Innenraum handeln. Vielmehr kommen dabei alle Gehäuse oder Gehäusebauteile in Betracht, darunter auch plattenförmige Gehäusebauteile, welche Bauteile, Baugruppen oder Anschlüsse der Druckmitteleinrichtung wie z.B. Magnetventile oder Relaisventile beherbergen, tragen oder wenigstens teilweise ummanteln.

Gemäß einer Weiterbildung ist die Formdichtung zwischen der ersten Fläche und der zweiten Fläche bzw. zwischen der ersten Schicht und der zweiten Schicht vorgespannt gehalten. Diese Vorspannung trägt dann zur Dichtigkeit zwischen den Kammern bei, wobei sich die Formdichtung und insbesondere deren Trennteil elastisch verformen.

Besonders bevorzugt ist der Trennteil stegartig ausgebildet und verbindet unter Trennung der ersten Kammer von der zweiten Kammer Abschnitte eines umlaufenden und wenigstens die erste Kammer und die zweite Kammer umschließenden Ringteils der Formdichtung miteinander. Diese, durch den Trennteil miteinander verbundenen Abschnitte des Ringteils liegen bevorzugt einander gegenüber.

Gemäß einer Weiterbildung kann der Ringteil mit dem Trennteil einstückig und beispielsweise als einstückiger Elastomer ausgeführt sein. Auch kann der Ringteil in einer umlaufenden nutartigen Aufnahme aufgenommen sein, welche von der ersten Fläche und/oder von der zweiten Fläche vorspringt.

Insbesondere können zwischen den beiden Schichten mehrere Kammern vorgesehen sind, welche jeweils durch ein vorhandenes oder nicht vorhandenes Trennteil einer aus der Gruppe von Formdichtungen ausgewählten Formdichtung voneinander getrennt oder miteinander verbunden sind. Eine einzige Formdichtung kann daher auch mehrere Trennteile aufweisen.

Besonders bevorzugt wird das Druckmittel durch Druckluft gebildet. Dann wird die Druckmitteleinrichtung bevorzugt durch eine Druckluftversorgungseinrichtung für Fahrzeug-Druckluftanlagen gebildet, umfassend als Bauteile oder Baugruppen wenigstens eine Lufttrocknereinrichtung mit einer Lufttrocknerpatrone, eine Ventileinrichtung mit einem Mehrkreisschutzventil und gegebenenfalls weiteren Ventilen, einen Druckbegrenzer, eine Steuer- und Regelelektronik sowie mehrere Schichten oder Gehäusebauteile, in oder an welchen die vorgenannten Bauteile oder Baugruppen untergebracht sind. Die Schichten oder Gehäusebauteile sind dann Schichten oder Gehäusebauteile in dem oben genannten Sinne. Mit der Gruppe von Formdichtungen können dann verschiedene Varianten von Druckluftversorgungseinrichtungen mit geringem Aufwand erzeugt werden.

Alternativ könnte die Druckmitteleinrichtung auch eine pneumatische oder elektropneumatische Bremseinrichtung, eine pneumatische oder elektropneumatische Luftfederungseinrichtung oder eine pneumatische oder elektropneumatische Türbetätigungseinrichtung sein.

Die Erfindung betrifft auch ein Fahrzeug, insbesondere ein Nutzfahrzeug beinhaltend eine oben beschriebene Druckmitteleinrichtung.

### Zeichnung

Die Erfindung wird nachstehend anhand von Ausführungsbeispielen unter Bezugnahme auf die beigefügte Zeichnung näher beschrieben. Es zeigt
- Fig.1: eine stark schematisierte Seitenansicht einer Druckluftversorgungseinrichtung als bevorzugte Ausführungsform einer Druckmitteleinrichtung gemäß der Erfindung;
- Fig.2: eine Rückansicht der Druckluftversorgungseinrichtung von Fig.1;
- Fig.3: eine seitliche Explosionsdarstellung der Druckluftversorgungseinrichtung von Fig.1;

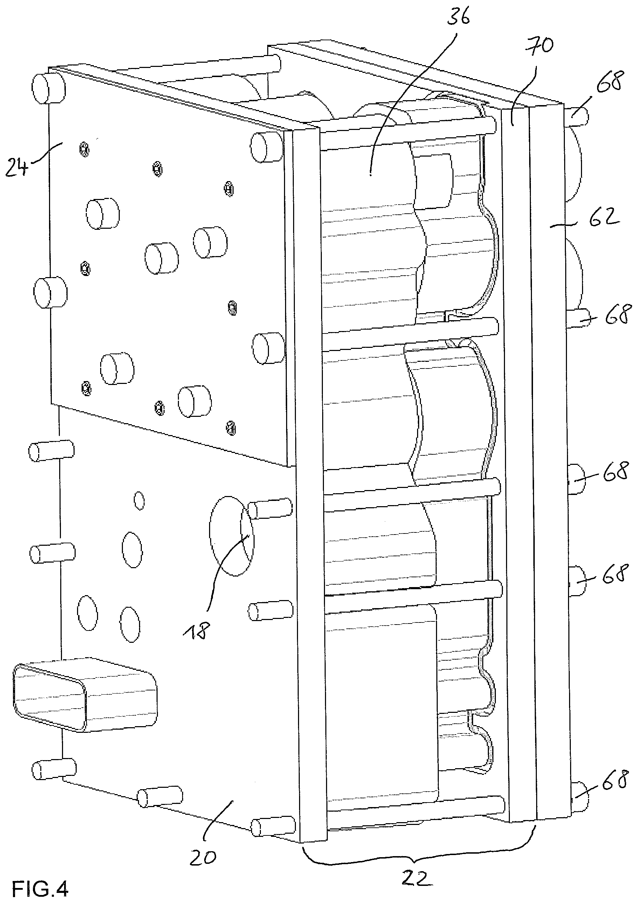

- Fig.4: eine perspektivische Ansicht eines mittleren Gehäuses der Druckluftversorgungseinrichtung von Fig.1;
- Fig.5: eine Querschnittsdarstellung eines Teils des mittleren Gehäuses der Druckluftversorgungseinrichtung von Fig.4;
- Fig.6: eine Draufsicht einer zwischen Gehäusen oder Gehäusebauteilen der Druckluftversorgungseinrichtung angeordneten Formdichtungen gemäß einer ersten Variante;
- Fig.7: eine Draufsicht einer zwischen Gehäusen oder Gehäusebauteilen der Druckluftversorgungseinrichtung angeordneten Formdichtungen gemäß einer zweiten Variante;
- Fig.8: eine Draufsicht einer zwischen Gehäusen oder Gehäusebauteilen der Druckluftversorgungseinrichtung angeordneten Formdichtungen gemäß einer dritten Variante;
- Fig.9a/9b: eine Querschnittsdarstellung der Druckluftversorgungseinrichtung mit einer Formdichtung im noch nicht vollständig und im vollständig montierten Zustand;
- Fig.10: eine Querschnittsdarstellung der Druckluftversorgungseinrichtung gemäß einer weiteren Ausführungsform quer in Bezug zu einer einen Trennteil einer Formdichtung aufnehmenden Nut;
- Fig.11: eine Querschnittsdarstellung der Druckluftversorgungseinrichtung gemäß einer weiteren Ausführungsform längs in Bezug zu einer einen Trennteil einer Formdichtung aufnehmenden Nut;
- Fig.12: eine Querschnittsdarstellung der Druckluftversorgungseinrichtung gemäß einer weiteren Ausführungsform längs in Bezug zu einer einen Trennteil einer Formdichtung aufnehmenden Nut ;
- Fig.13: eine Querschnittsdarstellung der Druckluftversorgungseinrichtung gemäß einer weiteren Ausführungsform längs in Bezug zu einer einen Trennteil einer Formdichtung aufnehmenden Nut.

### Beschreibung der Ausführungsbeispiele

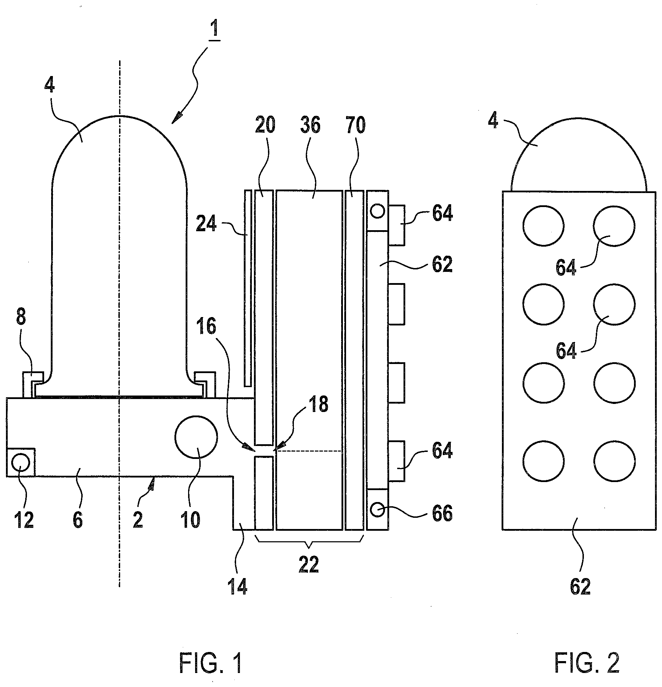

Die in Fig.1 gezeigte Druckluftversorgungseinrichtung 1 als bevorzugte Ausführungsform einer erfindungsgemäßen Druckmitteleinrichtung ist auf einem Nutzfahrzeug angeordnet und dient zur Druckluftversorgung von Druckluftverbrauchern wie einer pneumatischen oder elektropneumatischen Betriebsbremseinrichtung, Feststellbremseinrichtung, Luftfederungseinrichtung und/oder Türbetätigungseinrichtung.

Die Druckluftversorgungseinrichtung 1 weist eine Lufttrocknereinrichtung 2 mit einer Lufttrocknerpatrone 4 auf, welche lös- und auswechselbar an einem ersten Gehäuse 6 befestigt ist, welches weitere Bauelemente der Lufttrocknereinrichtung 2 wie beispielsweise ein hier nicht sichtbares Rückschlagventil beherbergt.

Das erste Gehäuse 6 besteht beispielsweise aus Aluminium und ist im Druckgussverfahren hergestellt. Die Lufttrocknerpatrone oder -kartusche 4 ist mittels einer Befestigungsvorrichtung 8, beispielsweise einem Bajonettverschluss an dem ersten Gehäuse 6 lösbar befestigt. Die Bauteile des Bajonettverschlusses 8 bestehen ebenfalls aus Metall wie auch sämtliche Anschlüsse des ersten Gehäuses 6 wie etwa ein Anschluss 10 für einen Druckluft fördernden Kompressor. Der Anschluss 10 für den Kompressor besteht beispielsweise in einem mit dem ersten Gehäuse 6 einstückig urgeformten Rohrstutzen, in dessen Öffnung ein Innengewinde für ein korrespondierendes Außengewinde eines fittings einer Kompressorleitung ausgebildet ist. An dem ersten Gehäuse 6 ist weiterhin eine Befestigungsvorrichtung 12 zur Befestigung der Druckluftversorgungseinrichtung 1 an einem Rahmen des Nutzfahrzeugs ausgebildet, beispielsweise in Form eines oder mehrerer Schraubaugen. Die Funktionsweise einer solchen Lufttrocknereinrichtung 2 ist hinlänglich bekannt und soll deshalb hier nicht weiter erläutert werden. Weiterhin ist vorzugsweise auch ein Druckbegrenzer oder Druckregler in dem ersten Gehäuse 6 angeordnet, welcher den Druck in den nachgeordneten Druckluftbehältern oder Druckkreisen regelt.

Das erste Gehäuse 6 weist eine Anschlussplatte 14 auf, die beispielsweise mit diesem einstückig als Aluminiumdruckgussformling urgeformt worden ist und in welcher Anschlüsse in Form von wenigstens einer Strömungsöffnung 16 ausgebildet sind. Diese Strömungsöffnung 16 fluchtet mit einer korrespondierend Strömungsöffnung 18 eines ersten Ventilblocks 20 als Gehäusebauteil eines zweiten Gehäuses 22, welches zumindest mit der Anschlussplatte 14 des ersten Gehäuses 6 verbunden ist, wobei auf diese Verbindung noch später eingegangen wird. Durch die miteinander kommunizierenden Strömungsöffnungen 16, 18 gelangt die vom Kompressor gelieferte, in der Lufttrocknereinrichtung 2 getrocknete Druckluft in den ersten Ventilblock 20 bzw. in das zweite Gehäuse 22. Eine zusätzliche, beispielsweise mit der Anschlussplatte 14 koplanare Stehplatte 24 kann die Verbindung zwischen dem ersten Gehäuse 6 und weiteren Gehäusen wie dem zweiten Gehäuse 22 verfestigen bzw. versteifen. Die Stehplatte 24 ist dabei ebenfalls aus Metall, z.B. aus Stahl gefertigt.

Der erste Ventilblock 20, der bevorzugt ein Spritzgussteil aus Kunststoff darstellt, bildet ein Gehäusebauteil mehrerer Gehäusebauteile, welche zusammen das zweite Gehäuse 22 bilden. Dieser erste Ventilblock 20 ist genauer ein Teil einer in dem zweiten Gehäuse 22 unterbrachten Ventileinrichtung 26, die unter anderem ein Mehrkreisschutzventil, insbesondere ein Vierkreisschutzventil und weitere Ventile wie etwa Magnetventile, Relaisventile und Wechselventile beinhaltet. Mittels des Mehrkreisschutzventils bzw. der Überströmventile wird eine Kreistrennung der an die Druckluftversorgungseinrichtung 1 angeschlossenen Druckluftverbraucherkreise wie Betriebsbremskreis I, Betriebsbremskreis II, Feststellbremskreis, Nebenverbraucherkreis realisiert. Nicht zuletzt können in dem zweiten Gehäuse 22 auch die elektronische Steuerung und die (Magnet-)Ventile einer elektropneumatischen Feststellbremseinrichtung und/oder einer elektropneumatischen Luftfederungseinrichtung des Nutzfahrzeugs untergebracht sein.

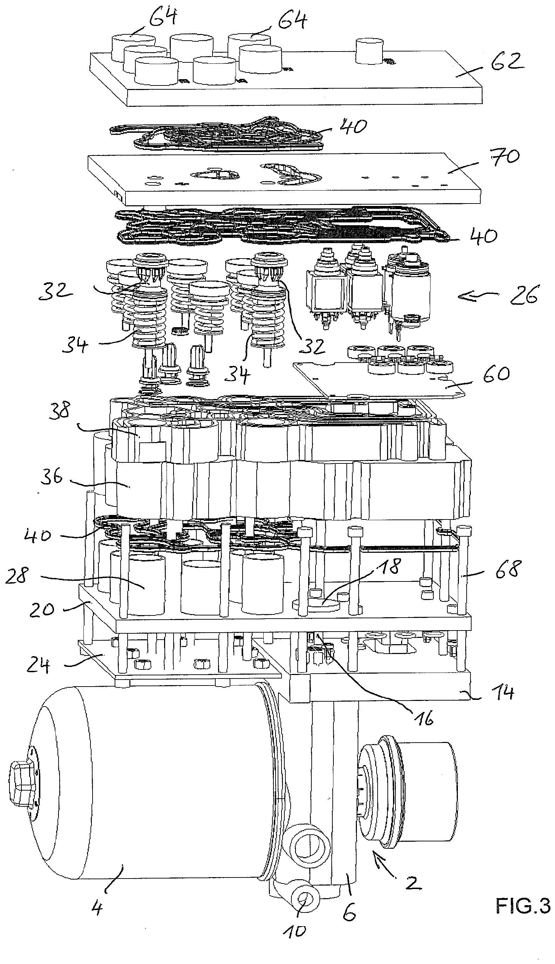

Der erste Ventilblock 20 weist beispielsweise erste Ventildome 28 auf, in welchen mit Ventilsitzen 30 zusammen wirkende Ventilkörper 32 von Sitzventilen der Ventileinrichtung 26 beweglich geführt sind. Die Ventilkörper 32 sind anhand der Explosionsdarstellung von Fig.3 einzeln erkennbar und durch Druckfedern 34 in Schließ- oder Öffnungsrichtung des betreffenden Sitzventils vorgespannt. Der Ventilblock 20 kann aber auch ohne Ventildome 28 ausgeführt sein.

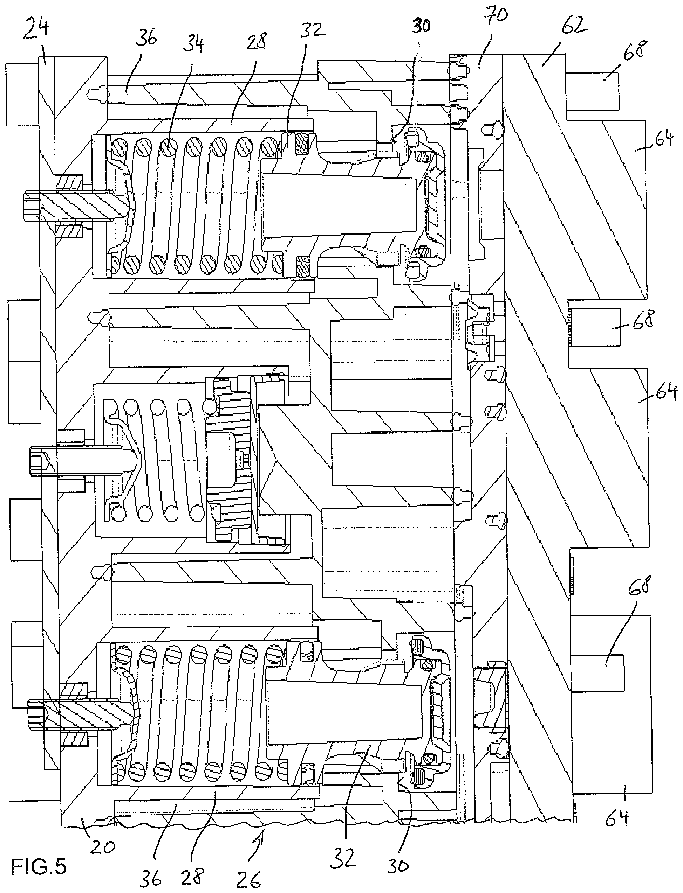

Das zweite Gehäuse 22 weist als weiteres Gehäusebauteil einen zweiten Ventilblock 36 der Ventileinrichtung 26 auf, mit zweiten Ventildomen 38, an welchen die Ventilsitze 30 der Sitzventile der Ventileinrichtung 26 vorzugsweise einstückig ausgebildet sind, wie insbesondere aus Fig.5 hervorgeht. Bei vom Ventilsitz 30 abgehobenem Ventilkörper 32 befindet sich das betreffende Sitzventil in Öffnungsstellung und bei gegen den Ventilsitz 30 gedrängtem Ventilkörper 32 in Schließstellung. Im vorliegenden Fall handelt es sich beispielsweise um ein Druckbegrenzungsventil, welches pneumatisch betätigt wird. Denkbar ist aber auch, dass die Öffnungs- bzw. Schließstellung wenigstens eines der dortigen Sitzventile magnetisch, d.h. mittels Be- oder Entstromung einer oder mehrerer Magnetspulen erfolgt.

Der zweite Ventilblock 36 stellt dabei bevorzugt ebenfalls ein Spritzgussteil aus Kunststoff dar. Weiterhin stellen der erste Ventilblock 20 und der zweite Ventilblock 36 separate Gehäusebauteile des zweiten Gehäuses 22 dar, als zumindest Abschnitte ihrer Umfangsflächen mit der Umgebung in Kontakt treten und sie Bauteile wie z.B. die Ventilkörper 32 in ihrem Inneren beherbergen.

Die ersten Ventildome 28 und die zweiten Ventildome 38 werden bei der Montage relativ zueinander derart positioniert, dass sie wenigstens teilweise axial ineinander ragen und die einander zugeordneten Ventilsitze 30 und Ventilkörper 32 miteinander fluchten. Hierzu sind entsprechende Zentriermaßnahmen vorgesehen. Dies veranschaulichen insbesondere Fig.3 und Fig.5.

Wie aus Fig.3 hervorgeht, sind einigen der Ventilblöcke oder Gehäusen oder Gehäusebauteilen der Druckluftversorgungseinrichtung 1 Formdichtungen 40 zwischengeordnet. Als Beispiel werden im Folgenden Formdichtungen 40a, 40b und 40c zwischen dem ersten Ventilblock 20 und dem zweiten Ventilblock 36 betrachtet, die beispielsweise jeweils als elastische, einstückige und aus einem Elastomer bestehende Formdichtungen 40a, 40b, 40c ausgeführt sind.

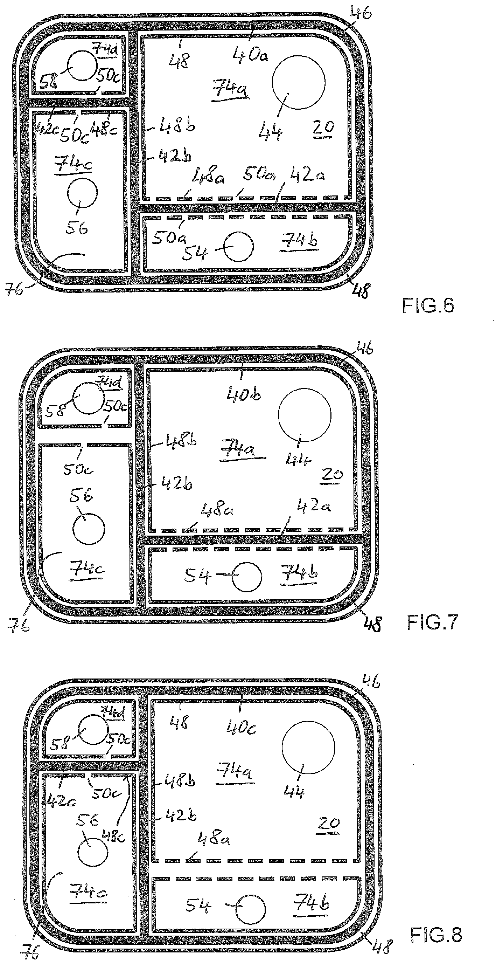

Die Figuren 6 bis 8 zeigen eine Draufsicht auf den ersten Ventilblock 20 bei von diesem abgehobenen zweiten Ventilblock 36, um die verschiedenen Formdichtungen 40a, 40b und 40c als beispielhafte Ausführungen der Erfindung besser veranschaulichen zu können.

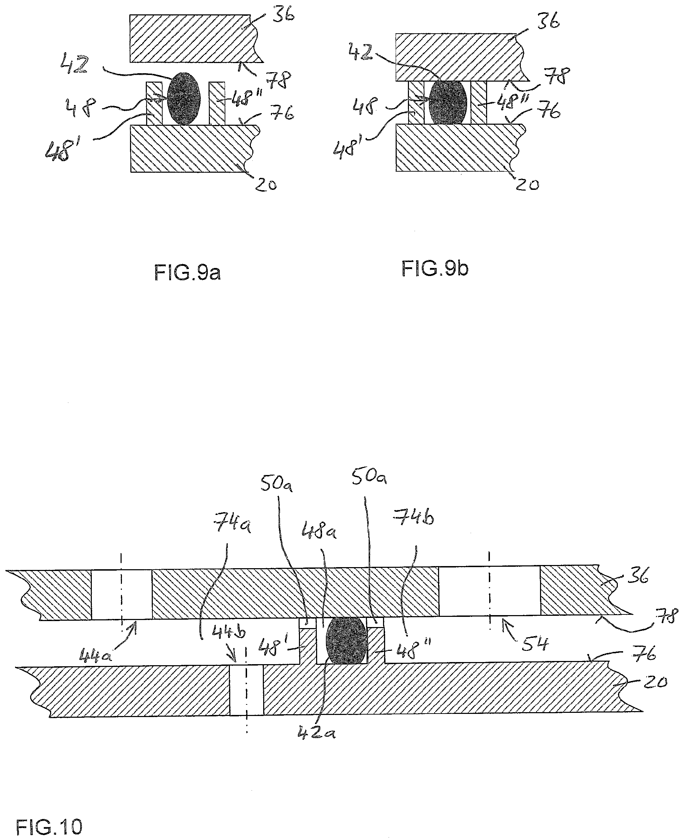

In Fig.6 ist eine erste Variante 40a einer solchen Formdichtung gezeigt. Die hier beispielhaft gezeigte Formdichtung 40a weist beispielsweise einen Ringteil 46 und hier beispielsweise drei vorzugsweise stegartig ausgebildete Trennteile 42a, 42b und 42c auf. Die Trennteile 42a, 42b und 42c verbinden Abschnitte des Ringteils 46 miteinander und trennen jeweils Kammern, hier beispielsweise vier Kammern 74a, 74b, 74c und 74d in einer Ebene parallel zu einer Fläche 76 des ersten Ventilblocks 20 und einer zweiten Fläche 78 des zweiten Ventilblocks 36. Die erste Fläche 76 und die zweite Fläche 78 weisen zueinander und üben eine Vorspannung auf die zwischen ihnen angeordnete Formdichtung 40a aus, welche diese elastisch verformt, um Dichtigkeit zwischen den Kammern 74a bis 74d und nach außen hin zu gewährleisten, wie insbesondere in Fig.9b veranschaulicht ist. Dabei hat die Formdichtung 40a beispielsweise einen elliptischen oder kreisförmigen Querschnitt und kontaktiert wenigstens die erste Fläche 76 wie auch die zweite Fläche 78 im eingebauten oder montierten Zustand gemäß Fig.9b unter Vorspannung. Fig.9a veranschaulicht einen Zustand, in dem der zweite Ventilblock 36 noch nicht vollständig am ersten Ventilblock 20 montiert ist, weshalb der Kontakt der Formdichtung 40a mit der zweiten Fläche 78 noch nicht zustande gekommen ist.

Figuren 9a und 9b illustrieren auch, dass eine Nut 48, welche einen Ringteil 46 oder einen Trennteil 42 einer Formdichtung 40 aufnimmt, in der Regel zwei parallel verlaufende Wände 48', 48" aufweist, welche entweder beide mit der ersten Fläche 76 des ersten Ventilblocks 20 verbunden sind und von dieser zur zweiten Fläche 78 des zweiten Ventilblocks 36 hinragen, wie aus Fig.9a hervorgeht, oder beide mit der zweiten Fläche 78 des zweiten Ventilblocks 36 verbunden sind und von dieser zur ersten Fläche 76 des zweiten Ventilblocks 20 hinragen. Möglich ist aber auch, dass die erste Wand 48'einer Nut 48 mit der ersten Fläche 76 des ersten Ventilblocks 20 und die zweite Wand 48" einer Nut 48 mit der zweiten Fläche 78 des zweiten Ventilblocks 36 verbunden ist und dann eine vollständige zweiwandige Nut 48 erst durch Montage der beiden Ventilblöcke 20, 36 entsteht. Die eine Nut 48 ausbildenden Wände 48' und 48" können daher entweder mit der ersten Fläche 76 und/oder mit der zweiten Fläche 78 verbunden und mit dieser insbesondere einstückig ausgeführt sein.

Die Formdichtung 40a, d.h. deren Ringteil 46 sowie die Trennteile 42a bis 42c sind hier in Nuten 48, 48a, 48b und 48c gehalten bzw. lagegesichert, die hier beispielsweise von der ersten Fläche 76 des ersten Ventilblocks 20 vorspringen. Dabei ist der Ringteil 46 in einer umlaufenden Ringnut 48 und die Trennteile 42a bis 42c jeweils in einer stegartigen Nut 48, 48a, 48b, 48c gehalten. Wie aus Fig.6 hervorgeht, umschließt der Ringteil 46 der Formdichtung 40a vorzugsweise alle Kammern 74a bis 74d. Jede der Kammern 74a bis 74d ist daher in einer Richtung senkrecht zur Plattenebene des ersten Ventilblocks 20 bzw. des zweiten Ventilblocks 36 einerseits durch die erste Fläche 76 des ersten Ventilblocks 20 und andererseits durch die zweite Fläche 78 des zweiten Ventilblocks 36 begrenzt. Parallel zur Plattenebene des ersten Ventilblocks 20 bzw. des zweiten Ventilblocks 36 sind die Kammern 74a bis 74d durch den Ringteil 46 der Formdichtung 40a, 40b, 40c sowie durch das betreffende oder die betreffenden Trennteile 42a, 42b, 42c voneinander getrennt.

In jede der Kammern 74a bis 74d mündet hier beispielsweise je ein Strömungskanal vorzugsweise senkrecht in die erste Fläche 76 des ersten Ventilblocks 20 in einer zugeordneten ersten Strömungsöffnung 44, zweiten Strömungsöffnung 54, dritten Strömungsöffnung 56 und vierten Strömungsöffnung 58. Dadurch steht beispielsweise jede der Strömungsöffnungen 44, 54, 56 und 58 mit jeweils einer anderen Kammer 74a bis 74d in Strömungsverbindung.

Anstatt hier nur vier Strömungsöffnungen 44, 54, 56 und 58 könnten in der ersten Fläche 76 des ersten Ventilblocks 20 auch mehr als vier Strömungsöffnungen ausgebildet sein, welche mit jeweils einer oder mehreren Kammern 74a, 74b, 74c, 74d in Strömungsverbindung stehen.

Anstatt nur in die erste Fläche 76 des ersten Ventilblocks 20 könnten die Strömungskanäle mittels der Strömungsöffnungen 44, 54, 56 und 58 auch allesamt in die zweite Fläche 78 des zweiten Ventilblocks 36 münden oder aber ein Teil der Strömungskanäle mittels Strömungsöffnungen in die erste Fläche 76 des ersten Ventilblocks 20 und ein weiterer Teil der Strömungskanäle mittels der Strömungsöffnungen in die zweite Fläche 78 des zweiten Ventilblocks 36. Ein Beispiel für die zuletzt genannte Variante ist in Fig.10 gezeigt, wo beispielsweise von zwei beispielsweise in die Kammer 74a mündenden Strömungsöffnungen 44a, 44b eine Strömungsöffnung 44a in dem zweiten Ventilblock 36 und eine weitere Strömungsöffnung 44b in dem ersten Ventilblock 20 ausgebildet ist. Weiterhin ist dort an der zweiten Fläche 78 des zweiten Ventilblocks 36 die zweite Strömungsöffnung 54 ausgebildet. Unerheblich ist daher, in welcher der beiden Flächen 76 oder 78 und in welcher Anzahl die Strömungsöffnungen 44, 54, 56 und 58 münden. Entscheidend ist daher lediglich, dass wenigstens zwei der Kammern 74a, 74b 74c und 74d mit einer Strömungsöffnung 44, 54, 56 und 58 und dem ihr jeweils zugeordneten Strömungskanal in Strömungsverbindung stehen.

Die Nut 48a zwischen der Kammer 74a und der Kammer 74b weist hier beispielsweise mehrere Durchbrüche 50a auf wie auch die Nut 48c zwischen der Kammer 74d und der Kammer 74c mehrere Durchbrüche 50c. Diese Durchbrüche 50a, 50c verlaufen beispielsweise senkrecht zu den Wänden der Nuten 48a bzw. 48c und schaffen, wenn dort kein Trennteil 42a bzw. 42c in der Formdichtung 40b oder 40c vorhanden ist, eine Strömungsverbindung zwischen den Kammern 74a und 74b bzw. zwischen den Kammern 74c und 74d wie anhand von Fig.7 und Fig.8 dargestellt ist. Da bei der Formdichtung 40avon Fig.6 jedoch Trennteile 42a und 42c vorhanden sind, sind diese dann nur theoretisch möglichen Strömungsverbindungen nicht vorhanden.

Bei der Formdichtung 40b von Fig.7 fehlt indes das Trennteil 42c, so dass dort eine Strömungsverbindung zwischen den Kammern 74c und 74d bzw. zwischen der dritten Strömungsöffnung 56 und der vierten Strömungsöffnung 58 vorhanden ist. Da die Formdichtung 40b von Fig.7 ansonsten identisch zur Formdichtung 40a von Fig.6 ist, sind die Kammern 74a, 74b weiterhin durch den Trennteil 42a voneinander getrennt, so dass keine Strömungsverbindung zwischen der ersten Strömungsöffnung 44 und der zweiten Strömungsöffnung 54 besteht.

Demgegenüber weist die Formdichtung 40c von Fig.8 den Trennteil 42c auf, so dass zwar keine Strömungsverbindung zwischen den Kammern 74c und 74d bzw. zwischen der dritten Strömungsöffnung 56 und der vierten Strömungsöffnung 58 vorhanden ist. Hingegen fehlt bei der Formdichtung 40c von Fig.8 der Trennteil 42a, so dass eine Strömungsverbindung zwischen den Kammern 74a und 74b bzw. zwischen der ersten Strömungsöffnung 44 und der zweiten Strömungsöffnung 54 besteht.

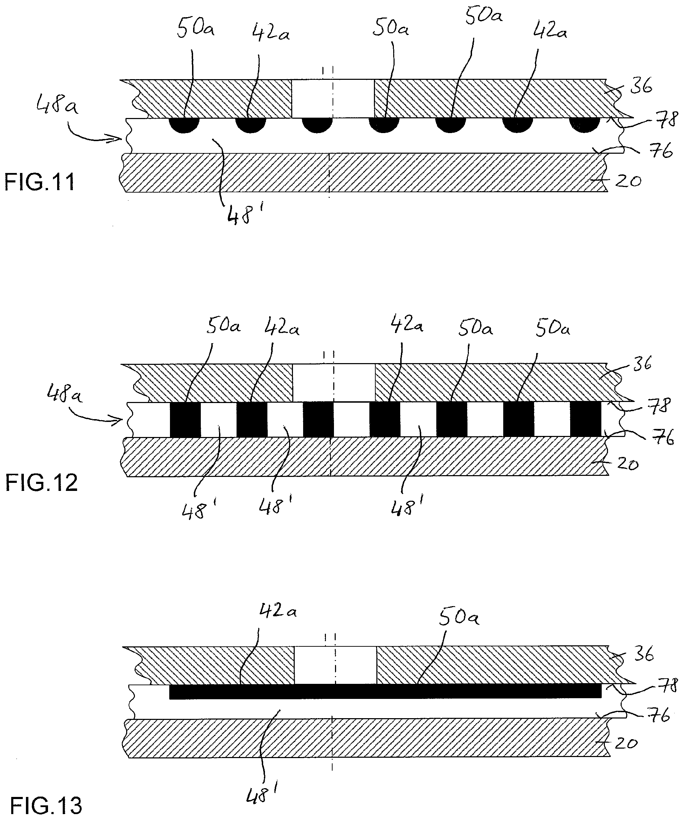

Fig.11 zeigt eine Ansicht der Ausführung von Fig.6 in Richtung parallel zu den beiden Flächen 76, 78 der beiden Ventilblöcke 20, 36. Dort ist zu erkennen, dass die Wände 48', 48" der Nut 48a vorzugsweise mehrere sich überdeckende Durchbrüche 50a aufweist, die hier beispielsweise halbkreisförmig ausgebildet sind. Die Durchbrüche 50a bilden dann, wenn sich wie nicht wie in Fig.6 kein Trennteil 42a in der betreffenden Nut 48a befindet Strömungskanäle zwischen den angrenzenden Kammern 74a und 74b aus, wobei der Gesamtströmungsquerschnitt durch die Summe der Querschnitte der halbkreisförmigen Durchbrüche 50a gebildet wird. Anhand von Fi.11 ist leicht vorstellbar, dass wenn sich kein Trennteil 42a in der Nut 48a befindet, wie dies bei der Formdichtung von Fig.8 der Fall ist, die Durchbrüche 50a dann eine Strömung zwischen den Kammern 74a und 74b zulassen.

Eine weitere Ausführungsform von Durchbrüchen 50a in einer Nut 48a bzw. in deren Wänden 48', 48" zeigt Fig.12. Dort sind die Durchbrüche 50a beispielsweise rechteckförmig und erstrecken sich beispielweise vollständig von der ersten Fläche 76 bis zur zweiten Fläche 78. Dadurch bestehen sie Wände 48' und 48" der Nut 48a beispielsweise aus einzelnen vorzugsweise in Richtung der Nut 48a gesehen mit gleichem Abstand zueinander angeordneten Elementen, die sich zahnartig und senkrecht von der ersten Fläche 76 weg in Richtung auf die zweite Fläche 78 erstrecken. Denkbar ist dabei auch, dass solche zahnartigen Elemente in Richtung der Nut 48a gesehen sich abwechselnd von der ersten Fläche 76 und von der zweiten Fläche 78 aus erstrecken und dann jeweils in die zwischen den Zähnen der jeweils gegenüber liegenden Fläche 76 oder 78 ausgebildeten Zwischenräume eingreifen.

Bei der Ausführungsform von Fig.13 ist beispielsweise lediglich ein rechteckförmiger Durchbruch 50a beispielsweise an den freien Rändern der Wände 48', 48" der Nut 48a vorhanden. Diese Ausführung entspricht der in Fig.10 gezeigten Ausführungsform lediglich in senkrechter Blickrichtung, bei welcher der rechteckförmige Durchbruch 50a als Spalt zu sehen ist.

Die Ausführungen von Fig.11 bis Fig.13 zeigen, dass es nicht auf den Querschnitt der Durchbrüche 50a, 50b, 50c ankommt. Entscheidend ist lediglich, dass sie einen freien Strömungsquerschnitt von einer Kammer 74a, 74b, 74c, 74d in eine andere Kammer 74a, 74b, 74c, 74d zur Verfügung stellen, wenn kein Trennteil 42a, 42b, 42c in der jeweiligen Nut 48a, 48b, 48c vorhanden ist.

Je nach Auswahl einer Formdichtung 40a, 40b oder 40 aus einer vorgegebenen Gruppe von Formdichtungen, welche an unterschiedlichen Stellen Trennteile 42a, 42b, 42c aufweisen, können daher unterschiedliche Strömungsverbindungen zwischen den den Strömungsöffnungen 44, 54, 56, 58 zugeordneten Strömungskanälen bzw. zwischen den Kammern 74a, 74b, 74c und 74d geschaffen oder gesperrt werden. Damit ergibt sich je nach Auswahl einer Formdichtung 40a, 40b oder 40c aus einer vorgegebenen Gruppe von Formdichtungen eine jeweils andere Pneumatikschaltung innerhalb der Druckluftversorgungseinrichtung 1.

Durch Ersetzen der Formdichtung 40a in Fig.6 durch die Formdichtung 40b gemäß Fig. 7 bzw. durch die Formdichtung 40c gemäß Fig.8 mit jeweils anderem fehlenden Trennteil 42c oder 42a oder anderen fehlenden Trennteilen können daher unterschiedliche Strömungsverbindungen zwischen den Strömungsöffnungen 44, 54, 56, 58 und deren zugeordneten Strömungskanälen im ersten Ventilblock 20 und/oder im zweiten Ventilblock 36 geschaffen werden.

Die Ringnuten 48, 48a, 48b und 48c können wie hier alle an einer Fläche, hier der ersten Fläche 76 angeordnet oder aber wechsel- oder abschnittsweise an der ersten Fläche 76 und an der zweiten Fläche 78, so dass eine Art Verzahnung entsteht, wenn der erste Ventilblock 20 mit dem zweiten Ventilblock 36 verbunden wird. Alternativ können auch alle Ringnuten 48, 48a, 48b und 48c an der zweiten Fläche 78 angeordnet sein und von dieser vorspringen.

Wie am besten anhand von Fig.3 sichtbar, ist in dem zweiten Gehäuse 22 auch eine Steuer- und Regelelektronik 60 angeordnet, welche über implementierte Steuer- und Regelsoftware vorzugsweise sämtliche Funktionen der Druckluftversorgungseinrichtung1 steuert bzw. regelt, unter anderem auch die Feststellbremsfunktion und/oder die Luftfederungsfunktion, wie oben bereist erwähnt. Eine die Steuer- und Regelelektronik 60 umfassende Platine ist dabei beispielsweise auf der vom ersten Ventilblock 20 weg weisenden Seitenfläche des zweiten Ventilblocks 36 befestigt.

Das zweite Gehäuse 22 bzw. unter anderem der erste Ventilblock 20 und der zweite Ventilblock 36 sind zwischen dem ersten Gehäuse 6 und einem dritten Gehäuse 62 gehalten, welches bevorzugt ebenfalls ein Aluminiumdruckgussteil darstellt, wobei ein Verbund aus dem ersten Gehäuse 6, dem zweiten Gehäuse 22 und dem dritten Gehäuse 62 ausgebildet wird. Das dritte Gehäuse 62 ist bevorzugt plattenförmig, wobei an dessen von dem zweiten Gehäuse 22 weg weisenden Fläche Anschlüsse 64 für Rohre und/oder Leitungen der Druckluftverbraucherkreise ausgebildet sind, wie insbesondere aus Fig.2 und Fig.3 hervorgeht.

Diese Anschlüsse 64 bestehen beispielsweise in mit dem dritten Gehäuse 62 einstückig urgeformten Rohrstutzen, in deren Öffnungen Innengewinde für korrespondierende Außengewinde von fittings der angeschlossenen Rohre und Leitungen ausgebildet sind. An dem dritten Gehäuse 62 ist weiterhin eine Befestigungsvorrichtung 66 zur Befestigung der Druckluftversorgungseinrichtung 1 an dem Rahmen des Nutzfahrzeugs ausgebildet, beispielsweise in Form eines oder mehrerer Schraubaugen. Folglich wird das hier beschriebene bevorzugte Ausführungsbeispiel einer Druckluftversorgungseinrichtung 1 bevorzugt lediglich an dem ersten Gehäuse 6 und an dem dritten Gehäuse 62 mittels entsprechender Befestigungsvorrichtungen 12, 66 am Rahmen des Nutzfahrzeugs gehalten, während des zweite Gehäuse 22 keine solche Befestigungseinrichtung aufweist. Alternativ könnte die Druckluftversorgungseinrichtung 1 auch lediglich über die Befestigungsvorrichtung 12 am ersten Gehäuse 6 oder die Befestigungsvorrichtung 66 am dritten Gehäuse 62 gehalten sein, wobei sich dann eine auskragende Lage ergibt.

Wie insbesondere Fig.3 veranschaulicht, wird das zweite Gehäuse 22 zwischen dem ersten Gehäuse 6 und dem dritten Gehäuse 62 mittels einerseits in dem ersten Gehäuse 6 und andererseits in dem dritten Gehäuse 62 gekonterter Zuganker 68 gehalten. Da sich die beiden Ventilblöcke 20, 36 und das dritte Gehäuse 62 in Bezug auf die Ebene der Anschlussplatte 14 des ersten Gehäuses 6 über diese Anschlussplatte 14 seitlich hinaus erstrecken, sind die Zuganker 68 auch in der Stehplatte 24 verankert. Die Anschlussplatte 14, die beiden Ventilblöcke 20, 36 sowie das plattenförmige dritte Gehäuse 62 sind weiterhin bevorzugt parallel angeordnet, was eine kompakte Bauform bedingt.

Wie insbesondere Fig.3 zeigt, umfasst das zweite Gehäuse 22 zusätzlich eine Zwischenplatte 70, welche zwischen dem zweiten Ventilblock 36 und dem dritten Gehäuse 62 angeordnet ist und welche Öffnungen oder Strömungskanäle aufweist, welche Öffnungen oder Strömungskanäle in dem zweiten Ventilblock 36 mit Öffnungen oder Strömungskanälen in dem dritten Gehäuse 62 miteinander verbindet, welche mit den Anschlüssen 64 für die Druckluftkreise der Druckluftverbraucher verbunden sind. Die Zwischenplatte 70, welche ebenfalls einen Spritzgussformling aus Kunststoff darstellt und parallel zu der Anschlussplatte 14, den beiden Ventilblöcken und dem plattenförmigen dritten Gehäuse angeordnet ist, lagert bzw. kontert zum einen Bauteile wenigstens einiger Ventile der Ventileinrichtung 26, welche durch Öffnungen der zweiten Ventildome 38 im zweiten Ventilblock 36 hindurchragen. Bei diesen Bauteilen handelt es sich beispielsweise um Ventilsitze, die dann in der Zwischenplatte 70 einstückig ausgebildet und mit dieser urgeformt sind.

Zum andern stellt die Zwischenplatte 70 Strömungswege und Strömungskanäle zwischen Ventilen der Ventileinrichtung 26 und den Anschlüssen 64 für die Druckluftverbraucherkreise her. Insbesondere können auf ihren einerseits dem zweiten Ventilblock 36 zugewandten Oberfläche und andererseits dem dritten Gehäuse 62 zugewandten Oberfläche nutenförmige Strömungswege und in Ihrem Inneren diese Strömungswege miteinander verbindende Strömungskanäle ausgebildet sein. Diese Strömungswege bzw. Strömungskanäle sind bevorzugt zusammen mit der Zwischenplatte 70 im Spritzgussverfahren einstückig urgeformt.

Wie bereits zwischen den Ventilblöcken sind auch einerseits dem zweiten Ventilblock 36 und der Zwischenplatte 70 und der Zwischenplatte 70 und dem dritten Gehäuse 62 ebenfalls Formdichtungen 40 dichtend zwischengeordnet, welche mit ihren Verschlussteilen 42 wenigstens eine Öffnung oder einen Strömungskanal der Zwischenplatte 70 dichtend verschließen. Die Dichtungsteile 46 der Formdichtungen 40 sind wiederum ebenfalls in Nuten im zweiten Ventilblock 36, in der Zwischenplatte 72 sowie in dem dritten Gehäuse 62 geführt und fixiert. Dann werden je nach Lage oder Ausführung der betreffenden Formdichtung 40 bestimmte Strömungswege verschlossen oder freigegeben.

Das zweite Gehäuse 22 umfasst hier daher die beiden Ventilblöcke 20, 36 sowie die Zwischenplatte 70 wie auch die Formdichtungen 40, wobei bevorzugt alle diese Ge-Bauteile aus Kunststoff bzw. aus Elastomer gefertigt sind. Vorzugsweise werden als Kunststoffe thermoplastische Kunststoffe, vorzugsweise semikristalline thermoplastische Kunststoffe verwendet, beispielsweise relativ dünnwandig mit bis zu 2,5 mm Wandstärke, vorzugsweise mit oder ohne Glasfaserverstärkung. Diese Teile 20, 36, 70 werden bevorzugt im Spritzgussverfahren hergestellt. Alternativ oder zusätzlich können auch Duroplaste verwendet werden, insbesondere, um dickwandige Teile 20, 36, 70 mit einer Wandstärke von mehr als 2,5 mm zu erzeugen.

Das erste Gehäuse 6 und das dritte Gehäuse 62 bestehen demgegenüber aus Metall, vorzugsweise aus Aluminium, wobei an diesen Gehäusen 6, 62 Anschlüsse 10, 64 zumindest für den Kompressor und die Druckluftverbraucherkreise vorzugsweise einstückig urgeformt ausgebildet werden, weil die Anschlüsse 10, 64, die z.B. als Rohrstutzen mit Innengewinde ausgebildet sind, höhere Anforderungen an Festigkeit und Steifigkeit erfüllen müssen.

Weiterhin bestehen an dem ersten Gehäuse 6 und an dem dritten Gehäuse 62 auch die Befestigungsvorrichtungen 8, 68 zur Befestigung der Druckluftversorgungseinrichtung 1 am Rahmen des Nutzfahrzeugs aus Metall, weil auch an diese Befestigungsvorrichtungen höhere Steifigkeits- und Festigkeitsanforderungen gestellt werden.

Daher werden bei der Druckluftversorgungseinrichtung 1 Metallgehäuse oder Metallkomponenten nur dort eingesetzt, wo die typisch hohe Festigkeit und Steifigkeit von Metallen vorteilhaft genutzt werden kann, beispielsweise als Verbundwerkstoff eines Verbunds aus Metall- und Kunststoffgehäusen oder -gehäusebauteilen 20, 36, 70, bei dem das zweite Gehäuse 22 aus Kunststoffgehäusebauteilen in Sandwichbauweise zwischen den ersten Gehäuse 6 aus Metall und dem dritten Gehäuse 62 aus Metall gehalten wird und die Kraftübertragung und Krafteinleitung vom Verbund oder von der Sandwichbauweise in die Struktur des Kraftfahrzeugs beispielsweise ausschließlich durch die aus Metall bestehenden ersten Gehäuse 6 und dritten Gehäuse 62 erfolgt.

Damit können für das von dem ersten Gehäuse 6 und dem dritten Gehäuse 62 umfasste oder umgriffene zweite Gehäuse 22 bzw. für dessen Gehäusebauteile 20, 36 und 70 Kunststoffe mit relativ geringer Festigkeit (Zugfestigkeiten < 200 N/mm², aber höhere Druckfestigkeit) genutzt werden, da dann ein großer Teil der Betriebs- und Gewichtskräfte von dem metallenen ersten Gehäuse 6 und dem metallenen dritten Gehäuse 62 aufgenommen wird.

### Bezugszeichenliste

- 1: Druckluftversorgungseinrichtung
- 2: Luftrocknereinrichtung
- 4: Lufttrocknerpatrone
- 6: erstes Gehäuse
- 8: Befestigungsvorrichtung
- 10: Anschluss
- 12: Befestigungsvorrichtung
- 14: Anschlussplatte
- 16: Strömungsöffnung
- 18: Strömungsöffnung
- 20: erster Ventilblock
- 22: zweites Gehäuse
- 24: Stehplatte
- 26: Ventileinrichtung
- 28: erste Ventildome
- 30: Ventilsitz
- 32: Ventilkörper
- 34: Druckfedern
- 36: zweiter Ventilblock
- 38: zweite Ventildome
- 40 a/b/c: Formdichtung
- 42 a/b/c: Trennteile
- 44: erste Strömungsöffnung
- 46: Ringteil
- 48 a/b/c: Nuten
- 50 a/c: Durchbrüche
- 54: zweite Strömungsöffnung
- 56: dritte Strömungsöffnung
- 58: vierte Strömungsöffnung
- 60: Steuer- und Regelelektronik
- 62: drittes Gehäuse
- 64: Anschlüsse
- 66: Befestigungsvorrichtung
- 68: Zuganker
- 70: Zwischenplatte
- 72: Ventilsitz
- 74 a/b/c/d: Kammer
- 76: erste Fläche
- 78: zweite Fläche

## Patentansprüche

1. Druckmitteleinrichtung (1) eines Fahrzeugs, in welcher ein Druckmittel strömt, mit einem Mehrschichtaufbau, der wenigstens zwei einander kontaktierende Schichten (20, 36) aufweist, wobei von wenigstens zwei Strömungsöffnungen (44, 54, 56, 58) jeweils eines Strömungskanals für das Druckmittel beide Strömungsöffnungen (44, 54, 56, 58) in einer ersten Fläche (76) einer ersten Schicht (20) der einander kontaktierenden Schichten (20, 36) oder eine erste Strömungsöffnung in der ersten Fläche (76) und eine zweite Strömungsöffnung in einer zweiten, der ersten Fläche (76) gegenüberliegenden Fläche (78) einer an die erste Schicht (20) angrenzenden zweiten Schicht (36) der einander kontaktierende Schichten (20, 36) mündet, wobei wenigstens eine von der ersten Fläche (76) und/oder von der zweiten Fläche (78) vorspringende nutartige Aufnahme (48, 48a, 48b, 48c) für wenigstens ein Trennteil (42a, 42b, 42c) einer zwischen den beiden Schichten (20, 36) angeordneten Formdichtung (40a, 40b, 40c) vorgesehen ist und die nutartige Aufnahme (48, 48a, 48b, 48c) in einer Ebene parallel zu den Schichten (20, 36) gesehen zwischen einer ersten Kammer (74a; 74c), in welche die erste Strömungsöffnung (44; 56) mündet und einer zweiten Kammer (74b; 74d), in welche die zweite Strömungsöffnung (54; 58) mündet, angeordnet ist, wobei die erste Kammer (74a; 74c) und die zweite Kammer (74b; 74d) wenigstens durch die erste Fläche (76) und durch die zweite Fläche (78) begrenzt sind, wobei
a) die nutartige Aufnahme (48, 48a, 48b, 48c) wenigstens einen Durchbruch (50a, 50c) für eine Strömungsverbindung zwischen der ersten Kammer (74a; 74c) und der zweiten Kammer (74b; 74d) in einer Ebene parallel zu den Schichten (20, 36) aufweist, **dadurch gekennzeichnet, dass**
b) eine Gruppe von Formdichtungen (40a, 40b, 40c) für eine Montage zwischen den beiden Schichten (20, 36) vorgesehen ist, wobei eine erste Formdichtung (40a) aus der Gruppe von Formdichtungen (40a, 40b, 40c) wenigstens im Bereich des Durchbruchs (50a; 50c) einen in der nutartigen Aufnahme (48a, 48c) aufgenommenen Trennteil (42a; 42c) zur Trennung der ersten Kammer (74a; 74c) von der zweiten Kammer (74b; 74d) aufweist und eine zweite Formdichtung (40b, 40c) aus der Gruppe von Formdichtungen (40a, 40b, 40c) wenigstens im Bereich des Durchbruchs (50a; 50c) ohne einen solchen Trennteil (42a; 42c) ausgebildet ist, wobei
c) abhängig von der jeweils aus der Gruppe von Formdichtungen (40a, 40b, 40c) ausgewählten und zwischen den beiden Schichten (20, 36) montierten Formdichtung (40a, 40b oder 40c) eine Strömungsverbindung zwischen der ersten Kammer (74a; 74c) und der zweiten Kammer (74b; 74d) zustande kommt oder nicht.

2. Druckmitteleinrichtung (1) nach Anspruch 1, **dadurch gekennzeichnet, dass** wenigstens eine der Schichten (20, 36) plattenförmig ausgebildet ist.

3. Druckmitteleinrichtung (1) nach Anspruch 1 oder 2, **dadurch gekennzeichnet, dass** wenigstens eine der Schichten (20, 36) ein Gehäuse oder ein Gehäusebauteil der Druckmitteleinrichtung (1) darstellt.

4. Druckmitteleinrichtung (1) nach einem der vorhergehenden Ansprüche, **dadurch gekennzeichnet, dass** der Trennteil (42a, 42b, 42c) stegartig ausgebildet ist und unter Trennung der ersten Kammer (74a; 74c) von der zweiten Kammer (74b; 74d) Abschnitte eines umlaufenden und wenigstens die erste Kammer (74a; 74c) und die zweite Kammer (74b; 74d) umschließenden Ringteils (46) der Formdichtung (40a, 40b, 40c) miteinander verbindet.

5. Druckmitteleinrichtung (1) nach Anspruch 4, **dadurch gekennzeichnet, dass** der Ringteil (46) mit dem Trennteil (42a, 42b, 42c) einstückig ausgeführt ist.

6. Druckmitteleinrichtung (1) nach Anspruch 4 oder 5, **dadurch gekennzeichnet, dass** der Ringteil (46) in einer umlaufenden nutartigen Aufnahme (48) aufgenommen ist, welche von der ersten Fläche (76) und/oder von der zweiten Fläche (78) vorspringt.

7. Druckmitteleinrichtung (1) nach einem der Ansprüche 4 bis 6, **dadurch gekennzeichnet, dass** die Formdichtung (40; 40a, 40b, 40c) aus einem Elastomer besteht.

8. Druckmitteleinrichtung (1) nach einem der vorhergehenden Ansprüche, **dadurch gekennzeichnet, dass** zwischen den beiden Schichten (20, 36) mehrere Kammern (74a; 74c bzw. 74b; 74d) vorgesehen sind, welche jeweils durch ein vorhandenes oder nicht vorhandenes Trennteil (42a, 42c) einer aus der Gruppe von Formdichtungen (40a, 40b, 40c) ausgewählten Formdichtung voneinander getrennt oder miteinander verbunden sind.

9. Druckmitteleinrichtung (1) nach einem der vorhergehenden Ansprüche, **dadurch gekennzeichnet, dass** die Formdichtung (40a, 40b, 40c) zwischen der ersten Fläche (76) und der zweiten Fläche (78) vorgespannt gehalten ist.

10. Druckmitteleinrichtung (1) nach einem der vorhergehenden Ansprüche, **dadurch gekennzeichnet, dass** das Druckmittel durch Druckluft gebildet wird.

11. Druckmitteleinrichtung (1) nach Anspruch 10, **dadurch gekennzeichnet, dass** sie eine Druckluftversorgungseinrichtung für Fahrzeug-Druckluftanlagen beinhaltet, umfassend als Bauteile oder Baugruppen wenigstens eine Lufttrocknereinrichtung (2) mit einer Lufttrocknerpatrone (4), eine Ventileinrichtung (26) mit einem Mehrkreisschutzventil und gegebenenfalls weiteren Ventilen, einen Druckbegrenzer, eine Steuer- und Regelelektronik (60) sowie mehrere Schichten oder Gehäusebauteile (6, 20, 22, 36, 62), in oder an welchen die vorgenannten Bauteile oder Baugruppen untergebracht sind.

12. Druckmitteleinrichtung (1) nach Anspruch 10, **dadurch gekennzeichnet, dass** sie eine pneumatische oder elektropneumatische Bremseinrichtung, eine pneumatische oder elektropneumatische Luftfederungseinrichtung oder eine pneumatische oder elektropneumatische Türbetätigungseinrichtung beinhaltet.

13. Fahrzeug beinhaltend eine Druckmitteleinrichtung (1) nach einem der vorhergehenden Ansprüche.

## Claims

1. Pressure medium device (1) of a vehicle, in which device a pressure medium flows, with a multi-layer structure which comprises at least two mutually contacting layers (20, 36), wherein, of at least two flow apertures (44, 54, 56, 58) respectively of a flow duct for the pressure medium, the two flow apertures (44, 54, 56, 58) open onto a first surface (76) of a first layer (20) of the mutually contacting layers (20, 36) or a first flow aperture opens onto the first surface (76) and a second flow aperture opens onto a second surface (78) of a second layer (36) of the mutually contacting layers (20, 36) opposite the first surface (76), which is adjacent to the first layer (20), wherein at least one groove-like receptacle (48, 48a, 48b, 48c), projecting from the first surface (76) and/or from the second surface (78), is provided for at least one separating portion (42a, 42b, 42c) of a moulded seal (40a, 40b, 40c) arranged between the two layers (20, 36), and the groove-like receptacle (48, 48a, 48b, 48c), as viewed in a plane parallel to the layers (20, 36), is arranged between a first chamber (74a; 74c) into which the first flow aperture (44; 56) opens and a second chamber (74b; 74d) into which the second flow aperture (54; 58) opens, wherein the first chamber (74a; 74c) and the second chamber (74b; 74d) are delimited at least by the first surface (76) and by the second surface (78), wherein
a) the groove-like receptacle (48, 48a, 48b, 48c) has at least one opening (50a, 50c) for a flow connection between the first chamber (74a; 74c) and the second chamber (74b; 74d) in a plane parallel to the layers (20, 36), **characterised in that**
b) a group of moulded seals (40a, 40b, 40c) is provided for fitting between the two layers (20, 36), such that a first moulded seal (40a) of the group of moulded seals (40a, 40b, 40c) has, in the area of the opening (50a; 50c), a separating portion (42a; 42c) held in the groove-like receptacle (48a, 48c) for separating the first chamber (74a; 74c) from the second chamber (74b; 74d) and a second moulded seal (40b, 40c) from the group of moulded seals (40a, 40b, 40c) is formed, at least in the area of the opening (50a; 50c), without such a separating portion (42a; 42c), wherein
c) depending on the particular moulded seal (40a, 40b or 40c) selected from the group of moulded seals (40a, 40b, 40c) and fitted between the two layers (20, 36), a flow connection will or will not exist between the first chamber (74a; 74c) and the second chamber (74b; 74d).

2. Pressure medium device (1) according to Claim 1, **characterised in that** at least one of the layers (20, 36) is plate-shaped.

3. Pressure medium device (1) according to Claims 1 or 2, **characterised in that** at least one of the layers (20, 36) constitutes a housing or a housing component of the pressure medium device (1).

4. Pressure medium device (1) according to any of the preceding claims, **characterised in that** the separating portion (42a, 42b, 42c) is in the form of a web and in separating the first chamber (74a; 74c) from the second chamber (74b; 74d), connects to one another sections of a surrounding annular portion (46) of the moulded seal (40a, 40b, 40c) that encloses at least the first chamber (74a; 74c) and the second chamber (74b; 74d).

5. Pressure medium device (1) according to Claim 4, **characterised in that** the said annular portion (46) is made integrally with the separating portion (42a, 42b, 42c).

6. Pressure medium device (1) according to Claims 4 or 5, **characterised in that** the annular portion (46) is held in an all-round groove-like receptacle (48), which projects from the first surface (76) and/or from the second surface (78).

7. Pressure medium device (1) according to any of Claims 4 to 6, **characterised in that** the moulded seal (40, 40a, 40b, 40c) consists of an elastomer.

8. Pressure medium device (1) according to any of the preceding claims, **characterised in that** between the two layers (20, 36) a plurality of chambers (74a; 74c or 74b; 74d) are provided, which in each case are separated from one another or connected to one another by the presence or absence of a separating portion (42a, 42c) of a moulded seal selected from the group of moulded seals (40a, 40b, 40c).

9. Pressure medium device (1) according to any of the preceding claims, **characterised in that** the moulded seal (40a, 40b, 40c) is held under some prestress between the first surface (76) and the second surface (78).

10. Pressure medium device (1) according to any of the preceding claims, **characterised in that** the pressure medium is compressed air.

11. Pressure medium device (1) according to Claim 10, **characterised in that** it contains a compressed-air supply device for vehicle compressed-air equipment, comprising as components or assemblies at least an air-drying unit (2) with an air-dryer cartridge (4), a valve device (26) with a multi-circuit protective valve and further valves as necessary, a pressure limiter, a control and regulation electronic system (60) and a plurality of layers or housing components (6, 20, 22, 36, 62) in or on which the aforesaid components or assemblies are accommodated.

12. Pressure medium device (1) according to Claim 10, **characterised in that** it comprises a pneumatic or electro-pneumatic brake system, a pneumatic or electro-pneumatic air suspension system or a pneumatic or electro-pneumatic door actuation device.

13. Vehicle comprising a pressure medium device (1) according to any of the preceding claims.

## Revendications

1. Dispositif (1) à fluide sous pression d'un véhicule, dans lequel s'écoule un fluide sous pression, ayant une structure stratifiée, qui a au moins deux couches (20, 36) en contact les unes avec les autres, dans lequel, par au moins deux ouvertures (44, 54, 56, 58) d'écoulement, respectivement, d'un conduit d'écoulement du fluide sous pression, deux ouvertures (44, 54, 56, 58) d'écoulement débouchent dans une première surface (76) d'une première couche (20) des couches (20, 36) en contact les unes avec les autres ou une première ouverture d'écoulement débouche dans la première surface (76) et une deuxième ouverture d'écoulement débouche dans une deuxième surface (78), opposée à la première surface (76), d'une deuxième couche (36), voisine de la première couche (20), des couches (20, 36) en contact les unes avec les autres, dans lequel au moins un logement (48, 48a, 48b, 48c) de type en rainure, en saillie de la première surface (76) et/ou de la deuxième surface (78), est prévue pour au moins une partie (42a, 42b, 42c) de séparation d'un joint (40a, 40b, 40c) de forme disposé entre les deux couches (20, 36) et le logement (48, 48a, 48b, 48c) de type à rainure est, considéré dans un plan parallèlement aux couches (20, 36), disposé entre une première chambre (74a ; 74c), dans laquelle débouche la première ouverture (44 ; 56) d'écoulement et une deuxième chambre (74b ; 74d), dans laquelle débouche la deuxième ouverture (54 ; 58) d'écoulement, la première chambre (74a ; 74c) et la deuxième chambre (74b ; 74d) étant délimitées au moins par la première surface (76) et par la deuxième surface (78), dans lequel
a) le logement (48, 48a, 48b, 48c) de type en rainure a, dans un plan parallèle aux couches (20, 36), au moins une traversée (50a, 50c) pour une liaison d'écoulement entre la première chambre (74a ; 74c) et la deuxième chambre (74b ; 74d), **caractérisée en ce que**
b) un groupe de joints (40a, 40b, 40c) de forme est prévu pour un montage entre les deux couches (20, 36), un premier joint (40a) de forme du groupe de joints (40a, 40b, 40c) de forme ayant au moins, dans la région de la traversée (50a ; 50c), une partie (42a ; 42c) de séparation, reçue dans le logement (48a, 48c) de type en rainure, pour la séparation de la première chambre (74a ; 74c) et de la deuxième chambre (74b ; 74d) et un deuxième joint (40b, 40c) de forme du groupe de joints (40a, 40b, 40c) de forme est constitué, au moins dans la région de la traversée (50a ; 50c), sans une telle partie (42a ; 42c) de séparation, dans lequel
c) en fonction du joint (40a, 40b ou 40c) de forme, choisi dans le groupe de joints (40a, 40b, 40c) de forme et monté entre les deux couches (20, 36), il y a ou il n'y a pas une liaison d'écoulement entre la première chambre (74a ; 74c) et la deuxième chambre (74b ; 74d).

2. Dispositif (1) à fluide sous pression suivant la revendication 1, **caractérisé en ce qu'**au moins l'une des deux couches (20, 36) est constituée en forme de plaque.

3. Dispositif (1) à fluide sous pression suivant la revendication 1 ou 2, **caractérisé en ce qu'**au moins l'une des couches (20, 36) représente une enveloppe ou une pièce constitutive d'une enveloppe du dispositif (1) à fluide sous pression.

4. Dispositif (1) à fluide sous pression suivant l'une des revendications précédentes, **caractérisé en ce que** la partie (42a, 42b, 42c) de séparation est constituée en étant de type à entretoise et par la séparation de la première chambre (74a ; 74c) de la deuxième chambre (74b ; 74d), des segments d'une partie (46) annulaire, faisant le tour et entourant au moins la première chambre (74a ; 74c) et la deuxième chambre (74b ; 74d), du joint (40a, 40b, 40c) de forme, sont reliés entre eux.

5. Dispositif (1) à fluide sous pression suivant la revendication 4, **caractérisé en ce que** la partie (46) annulaire est réalisée d'une seule pièce avec la partie (42a, 42b, 42c) de séparation.

6. Dispositif (1) à fluide sous pression suivant la revendication 4 ou 5, **caractérisé en ce que** la partie (46) annulaire est reçue dans un logement (48) de type en rainure faisant le tour, qui fait saillie de la première surface (76) et/ou de la deuxième surface (78).

7. Dispositif (1) à fluide sous pression suivant l'une des revendications 4 à 6, **caractérisé en ce que** le joint (40 ; 40a, 40b, 40c) de forme est en un élastomère.

8. Dispositif (1) à fluide sous pression suivant l'une des revendications précédentes, **caractérisé en ce qu'**il est prévu entre les deux couches (20, 36) plusieurs chambres (74a ; 74c et 74b ; 74d), qui sont chacune séparées les unes des autres ou reliées les unes aux autres par une partie (42a, 42c) de séparation présente ou non présente d'un joint de forme choisi dans le groupe de joints (40a, 40b, 40c) de forme.

9. Dispositif (1) à fluide sous pression suivant l'une des revendications précédentes, **caractérisé en ce que** le joint (40a, 40b, 40c) de forme est maintenu précontraint entre la première surface (76) et la deuxième surface (78).

10. Dispositif (1) à fluide sous pression suivant l'une des revendications précédentes, **caractérisé en ce que** le fluide sous pression est formé d'air comprimé.

11. Dispositif (1) à fluide sous pression suivant la revendication 10, **caractérisé en ce qu'**il comporte un dispositif d'alimentation en air comprimé pour des installations à air comprimé de véhicule, comprenant, comme pièces constitutives ou comme modules, au moins un dispositif (2) de séchage d'air ayant une cartouche (4) de déshumidificateur d'air, un dispositif (26) de soupape ayant une soupape de protection à plusieurs circuits et, le cas échant, d'autres soupapes, un limiteur de pression, une électronique (60) de commande et de réglage, ainsi que plusieurs couches ou parties (6, 20, 22, 36, 62) constitutives d'une enveloppe, dans ou sur laquelle les pièces constitutives ou les modules mentionnés ci-dessus sont logés.

12. Dispositif (1) à fluide sous pression suivant la revendication 10, **caractérisé en ce qu'**il comporte un dispositif pneumatique ou électro pneumatique de freinage, un dispositif pneumatique ou électro pneumatique de suspension pneumatique ou un dispositif pneumatique ou électro pneumatique d'actionnement de porte.

13. Véhicule comportant un dispositif (1) à fluide sous pression suivant l'une des revendications précédentes.
